# FASCICULE DE BREVET EUROPEEN

(11) **EP 3 435 825 B1**
(45) Date de publication et mention de la délivrance du brevet: **26.08.2020**
(21) Numéro de dépôt: 17718109.6
(22) Date de dépôt: 30.03.2017
(51) Int. Cl.: A47J 37/06

(54) **CUISEUR À AIR CHAUD**
HEISSLUFTKOCHER
HOT-AIR COOKER

(30) Priorité: 31.03.2016 CN 201620270787 U
(43) Date de publication de la demande: 06.02.2019
(73) Titulaire: SEB S.A., 69130 Ecully (FR)
(72) Inventeur: GANGLIN, Chen, Shaoxing Zhejiang 312017 (CN); YONGZHU, Lu, Shaoxing Zhejiang 312017 (CN); CHENG, Lin, Shaoxing Zhejiang 312017 (CN)
(74) Mandataire: Soares, Luis Filipe
(86) Numéro de dépôt international: PCT/FR2017/050734
(87) Numéro de publication internationale: WO 2017/191377

(56) Documents cités:
- FR-A1- 2 995 775
- US-A1- 2008 163 764

## Description

La présente invention concerne le domaine de l'électroménager de cuisine, plus concrètement un cuiseur.

Les cuiseurs actuellement sur le marché, comme par exemple les friteuses à air chaud, chauffent toujours les aliments soit de haut en bas, soit de bas en haut, mais sans mouvement de convection de l'air chaud. En conséquence, la cuisson des aliments est plus lente et manque d'homogénéité.

La présente invention consiste en un cuiseur visant à résoudre le problème de l'absence de mouvement de convection de l'air chaud pendant la cuisson.

Afin d'atteindre cet objectif, la présente invention propose un cuiseur à air chaud comprenant :
- Un boîtier comportant une conduite de ventilation interne munie d'une entrée et d'une sortie d'air ;
- Une cuve extérieure, installée à l'intérieur du boîtier ;
- Un couvercle supérieur, installé au-dessus de la cuve extérieure ; la cuve extérieure et le couvercle supérieur constituant une cavité, l'entrée et la sortie d'air de la conduite de ventilation communiquant avec la cavité ;
- Une cuve intérieure, située à l'intérieur de la cavité ;
- Un ventilateur, installé à l'intérieur de la conduite de ventilation ;
- Une résistance, installée à l'intérieur de la conduite de ventilation et jouxtant le ventilateur.

Selon une autre variante de réalisation, la sortie d'air de la conduite de ventilation est située au-dessus de son entrée d'air, et le rebord de la cuve intérieure est situé au dessous de la sortie d'air de la conduite de ventilation.

Selon une autre variante de réalisation, le rebord de la cuve intérieure est situé au-dessus de l'entrée d'air de la conduite de ventilation.

Selon une autre variante de réalisation, la résistance jouxte le ventilateur et est située au-dessus de celui-ci.

Selon une autre variante de réalisation, la conduite de ventilation comprend une entrée d'air et une sortie d'air de même hauteur et également de même largeur.

Selon une autre variante de réalisation, la conduite de ventilation comprend une entrée d'air et une sortie d'air de hauteurs différentes et également de largeurs différentes.

Selon une autre variante de réalisation, le ventilateur est de type axial ou radial.

Selon l'invention le cuiseur à air chaud comprend une cuve intérieure dans le fond de laquelle est installé un mélangeur rotatif, le cuiseur comportant un moteur installé au fond de la cuve extérieure, et dont l'arbre de sortie entraîne le mélangeur.

Selon l'invention le cuiseur comporte une plaque chauffante située à l'intérieur de la cavité et traversée par l'arbre de sortie du moteur, la cuve intérieure étant posée sur la plaque chauffante, et les aliments pouvant être chauffés par la plaque chauffante et la résistance, en même temps ou de manière indépendante.

Les dessins annexes, qui constituent une partie intégrante de la présente invention, sont destinés à améliorer la compréhension de l'invention. Les exemples d'application schématique de la présente invention et leurs explications sont destinés à expliquer la présente invention sans pour autant constituer de restriction inappropriée de celle-ci. Dans les dessins annexes :
- La figure 1 est le schéma structurel d'un cuiseur selon un exemple d'application de la présente invention, vu de dessus ;
- La figure 2 est une coupe A-A de la figure 1.

Il convient de préciser qu'en l'absence d'incompatibilité, les exemples d'application de la présente invention et les caractéristiques de ces exemples d'application peuvent être mutuellement combinés. Nous verrons ci-après en détail la présente invention au moyen des dessins annexes de référence combinés à des exemples d'application.

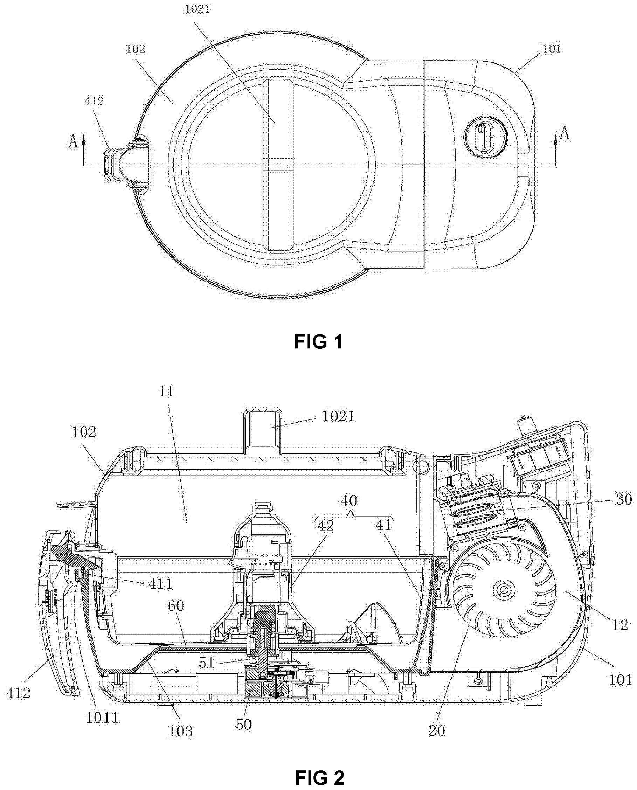

L'exemple d'application de la présente invention est un cuiseur à air chaud avec un boîtier 101, une cuve intérieure 41, un ventilateur 20 et une résistance 30 (voir fig. 1 et 2). Le boîtier 101 comporte une cuve extérieure 103 et un couvercle supérieur 102 reliés entre eux. Le boîtier 101 contient une cavité 11 dans laquelle se trouve la cuve intérieure 41, elle-même posée sur la cuve extérieure 103. Le couvercle supérieur 102 permet d'ouvrir et de fermer la cuve intérieure 41. Une conduite de ventilation 12 est située contre le côté intérieur du boîtier 101. L'entrée et la sortie d'air de la conduite de ventilation 12 communiquent avec la cavité 11. Le ventilateur 20 est installé dans la conduite de ventilation 12. La résistance 30 est également installée dans la conduite de ventilation 12, au-dessus du ventilateur 20. Quand le ventilateur 20 fonctionne, il souffle l'air chauffé par la résistance 30 dans la cavité 11 où se trouvent les aliments.

Dans la solution proposée, le cuiseur à air chaud présente un boîtier 101 de forme approximativement circulaire (voir fig. 1). Une cuve intérieure 41 est située dans la cuve extérieure 103 ; un couvercle supérieur 102 est placé au-dessus de la cuve extérieure 103 et sert à fermer la cuve intérieure pendant la cuisson, avant d'être ouvert pour récupérer les aliments une fois la cuisson terminée. Par ailleurs, sur le couvercle supérieur 102 se trouve une poignée 1021 rendant le couvercle plus facile à manipuler pour l'utilisateur.

Le ventilateur 20 de la conduite de ventilation 12 du cuiseur met l'air en mouvement. L'air est chauffé par la résistance 30 et passe de la sortie d'air de la conduite de ventilation jusqu'à la cavité 11, où il chauffe les aliments de la cuve intérieure 41. Comme l'entrée d'air de la conduite de ventilation 12 communique avec la cavité 11, la conduite de ventilation 12 et la cavité 11 constituent un circuit de convection fermé. L'air chauffé par la résistance 30, après avoir chauffé les aliments, passe dans l'entrée d'air de la conduite de ventilation en gardant une certaine quantité de chaleur résiduelle ; cet air encore chaud est réchauffé par la résistance 30 puis repasse dans la cavité 11 où il chauffe davantage les aliments de la cuve intérieure 41. En conclusion, la présente invention fonctionne selon le principe d'un circuit de convection d'air chaud qui augmente l'efficacité de la cuisson.

Il convient de préciser que dans le présent exemple, la sortie d'air et l'entrée d'air de la conduite de ventilation 12 peuvent être de même taille ou non. Par exemple, la hauteur et la largeur de la sortie d'air et de l'entrée d'air peuvent être identiques ou différentes. Ce paramètre peut être adapté en fonction de l'application visée.

Dans le présent exemple, la sortie d'air de la conduite de ventilation 12 est située au-dessus de l'entrée d'air (voir fig. 2), le rebord de la cuve intérieure 41 est situé au dessous de la sortie d'air de la conduite de ventilation 12 et au-dessus de l'entrée d'air de la conduite de ventilation. Comme la paroi de la cuve intérieure 41 constitue dans une certaine mesure un obstacle à la circulation de l'air entre l'entrée et la sortie d'air, l'air chaud reste dans la cuve intérieure 41 pendant un peu plus longtemps, améliorant par là même l'efficacité de la cuisson, puis, sous l'effet de la force d'aspiration du ventilateur 20, repasse dans l'entrée d'air, et le cycle recommence.

Selon un autre exemple de réalisation (non illustré), l'entrée et la sortie d'air sont situées toutes les deux au-dessus du rebord de la cuve intérieure 41 ; en outre, l'entrée et la sortie d'air de la conduite de ventilation 12 sont à la même hauteur, et le rebord de la cuve intérieure 41 est situé au dessous de la sortie d'air de la conduite de ventilation 12. De cette manière, l'air circule plus rapidement.

Dans l'exemple de réalisation de la figure 2, un mélangeur 42 rotatif est monté au fond de la cuve intérieure 41. Le mélangeur 42 et la cuve intérieure 41 constituent l'ensemble cuve intérieure 40. Le cuiseur comporte par ailleurs un moteur 50 installé au fond du boîtier, et dont l'arbre de sortie 51 entraîne le mélangeur 42. Pendant la cuisson, le mélangeur 42 entraîné par le moteur 50 mélange les aliments et les met en contact avec la paroi à haute température de la cuve intérieure 41. La cuisson est ainsi à la fois plus homogène et plus savoureuse.

Du fait du mouvement de rotation du mélangeur 42 pendant la cuisson, la cuve intérieure 41 a naturellement tendance à suivre le mouvement et à tourner en même temps. Pour remédier à ce problème, le boîtier 101 comporte une rainure 1011 de positionnement dans laquelle vient s'insérer une saillie 411 de positionnement située sur la paroi extérieure de la cuve intérieure 41 lors du montage de celle-ci dans la cavité 11 ; la cuve intérieure 41 est ainsi immobilisée. Ce dispositif de saillie 411 et de rainure 1011 de positionnement permet à l'utilisateur d'installer plus rapidement et plus précisément la cuve intérieure 41 dans la cavité 11.

Dans l'application, la cuve intérieure 41 étant portée à très haute température pendant la cuisson, afin d'éviter tout risque de brûlure pour l'utilisateur, la cuve intérieure 41 comporte une poignée 412 installée sur sa paroi extérieure. En conséquence, la paroi du boîtier 101 comporte un évidement destiné à accueillir la poignée 412 de la cuve intérieure 41 lors du montage de celle-ci dans la cavité 11. La saillie 411 de positionnement est située entre la paroi de la cuve intérieure 41 et la poignée 412 de celle-ci. Ainsi, cette saillie 411 n'est pas visible sur le rebord de la cuve intérieure 41. Une saillie visible à cet endroit nuirait à l'esthétique de la cuve.

Dans cette application, afin d'améliorer le rendement de cuisson du cuiseur, celui-ci comporte également une plaque chauffante 60 située à l'intérieur de la cavité 11 et traversée par l'arbre de sortie 51 du moteur 50. Pendant la cuisson, la cuve intérieure 41 est posée sur la plaque chauffante 60, et les aliments peuvent être chauffés par la plaque chauffante 60 et la résistance 30 soit en même temps, soit de manière indépendante.

Avantageusement, le ventilateur 20 est de type axial ou radial.

Comme l'indiquent les figures 1 et 2, le cuiseur comporte un couvercle supérieur 102 qui se ferme sur le boîtier 101 par un mouvement de rotation. Le montage rotatif du couvercle supérieur 102 sur le boîtier 101 permet à l'utilisateur d'ouvrir plus facilement le cuiseur.

La présente invention n'est nullement limitée aux modes de réalisation décrits, mais englobe de nombreuses modifications dans le cadre des revendications.

## Revendications

1. Cuiseur à air chaud comprenant :
- un boîtier (101) comportant une conduite de ventilation (12) interne munie d'une entrée et d'une sortie d'air ;
- une cuve extérieure (103), installée à l'intérieur du boîtier (101) ;
- un couvercle supérieur (102), installé au-dessus de la cuve extérieure (103) ; la cuve extérieure (103) et le couvercle supérieur (102) constituant une cavité (11), l'entrée et la sortie d'air de la conduite de ventilation (12) communiquant avec la cavité (11) ;
- une cuve intérieure (41), située à l'intérieur de la cavité (11) ;
- un ventilateur (20), installé à l'intérieur de la conduite de ventilation (12) ;
- une résistance (30), installée à l'intérieur de la conduite de ventilation (12) et jouxtant le ventilateur,
- un mélangeur (42) rotatif installé dans le fond de la cuve intérieure (41),
- un moteur (50) installé au fond de la cuve extérieure, et dont l'arbre de sortie (51) entraîne le mélangeur (42),
**caractérisé en ce que** le cuiseur comporte une plaque chauffante (60) située à l'intérieur de la cavité (11) et traversée par l'arbre de sortie (51) du moteur (50), la cuve intérieure (41) étant posée sur la plaque chauffante (60), et les aliments pouvant être chauffés par la plaque chauffante (60) et la résistance (30), en même temps ou de manière indépendante.

2. Cuiseur selon la revendication précédente, **caractérisé en ce que** la sortie d'air de la conduite de ventilation (12) est située au-dessus de son entrée d'air, et le rebord de la cuve intérieure (41) est situé au-dessous de la sortie d'air de la conduite de ventilation.

3. Cuiseur selon l'une des revendications précédentes, **caractérisé en ce que** le rebord de la cuve intérieure (41) est situé au-dessus de l'entrée d'air de la conduite de ventilation (12).

4. Cuiseur selon l'une des revendications précédentes **caractérisé en ce que** la résistance (30) jouxte le ventilateur (20) et est située au-dessus de celui-ci.

5. Cuiseur selon l'une des revendications précédentes **caractérisé en ce que** la conduite de ventilation (12) comprend une entrée d'air et une sortie d'air de même hauteur et également de même largeur.

6. Cuiseur selon l'une des revendications 1 à 4 **caractérisé en ce que** la conduite de ventilation (12) comprend une entrée d'air et une sortie d'air de hauteurs différentes et également de largeurs différentes.

7. Cuiseur selon l'une des revendications précédentes **caractérisé en ce que** le ventilateur (20) est de type axial ou radial.

## Patentansprüche

1. Heißluftkocher, umfassend:
- ein Gehäuse (101), das eine innere Lüftungsleitung (12) beinhaltet, die mit einem Eingang und einem Ausgang für Luft versehen ist;
- eine äußere Wanne (103), die im Inneren des Gehäuses (101) installiert ist;
- einen oberen Deckel (102), der oberhalb der äußeren Wanne (103) installiert ist; wobei die äußere Wanne (103) und der obere Deckel (102) einen Hohlraum (11) bilden, wobei der Eingang und der Ausgang für Luft der Lüftungsleitung (12) mit dem Hohlraum (11) verbunden sind;
- eine innere Wanne (41), die sich im Inneren des Hohlraumes (11) befindet;
- einen Lüfter (20), der im Inneren der Lüftungsleitung (12) installiert ist;
- einen Widerstand (30), der im Inneren der Lüftungsleitung (12) installiert ist und am Lüfter anliegt,
- einen Drehmischer (42), der am Boden der inneren Wanne (41) installiert ist,
- einen Motor (50), der am Boden der äußeren Wanne installiert ist, und dessen Ausgangswelle (51) den Mischer (42) antreibt,
**dadurch gekennzeichnet, dass** der Kocher eine Heizplatte (60) beinhaltet, die sich im Inneren des Hohlraumes (11) befindet, und durch die Ausgangswelle (51) des Motors (50) durchquert wird, wobei die innere Wanne (41) auf der Heizplatte (60) abgestellt ist, und die Nahrungsmittel durch die Heizplatte (60) und den Widerstand (30) gleichzeitig oder unabhängig voneinander erwärmt werden können.

2. Kocher nach dem vorstehenden Anspruch, **dadurch gekennzeichnet, dass** sich der Ausgang für Luft der Lüftungsleitung (12) oberhalb seines Eingangs für Luft befindet und sich der Rand der inneren Wanne (41) unterhalb des Ausgangs für Luft der Lüftungsleitung befindet.

3. Kocher nach einem der vorstehenden Ansprüche, **dadurch gekennzeichnet, dass** sich der Rand der inneren Wanne (41) oberhalb des Eingangs für Luft der Lüftungsleitung (12) befindet.

4. Kocher nach einem der vorstehenden Ansprüche, **dadurch gekennzeichnet, dass** der Widerstand (30) an dem Lüfter (20) anliegt und sich oberhalb desselben befindet.

5. Kocher nach einem der vorstehenden Ansprüche, **dadurch gekennzeichnet, dass** die Lüftungsleitung (12) einen Eingang für Luft und einen Ausgang für Luft mit derselben Höhe und auch derselben Breite umfasst.

6. Kocher nach einem der Ansprüche 1 bis 4, **dadurch gekennzeichnet, dass** die Lüftungsleitung (12) einen Eingang für Luft und einen Ausgang für Luft mit unterschiedlichen Höhen und auch unterschiedlichen Breiten umfasst.

7. Kocher nach einem der vorstehenden Ansprüche, **dadurch gekennzeichnet, dass** der Lüfter (20) vom Typ axial oder radial ist.

## Claims

1. Hot-air cooker comprising:
- a housing (101) including an internal ventilation conduit (12) provided with an air inlet and an air outlet;
- an outer container (103), installed inside the housing (101);
- an upper cover (102), installed above the outer container (103); the outer container (103) and the upper cover (102) constituting a cavity (11), the air inlet and air outlet of the ventilation conduit (12) communicating with the cavity (11);
- an inner container (41), located inside the cavity (11);
- a fan (20), installed inside the ventilation conduit (12);
- a resistor (30), installed inside the ventilation conduit (12) and adjacent to the fan,
- a rotating mixer (42) installed in the bottom of the inner container (41),
- a motor (50) installed at the bottom of the outer container, and of which the output shaft (51) drives the mixer (42),
**characterised in that** the cooker includes a heating plate (60) located inside the cavity (11) and through which passes the output shaft (51) of the motor (50), the inner container (41) being placed on the heating plate (60), and the food able to be heated by the heating plate (60) and the resistor (30), at the same time or independently.

2. Cooker according to the preceding claim, **characterised in that** the air outlet of the ventilation conduit (12) is located above the air inlet thereof, and the edge of the inner container (41) is located below the air outlet of the ventilation conduit.

3. Cooker according to one of the preceding claims, **characterised in that** the edge of the inner container (41) is located above the air inlet of the ventilation conduit (12).

4. Cooker according to one of the preceding claims **characterised in that** the resistor (30) is adjacent to the fan (20) and is located above the latter.

5. Cooker according to one of the preceding claims **characterised in that** the ventilation conduit (12) comprises an air inlet and an air outlet of the same height and also of the same width.

6. Cooker according to one of claims 1 to 4 **characterised in that** the ventilation conduit (12) comprises an air inlet and an air outlet of different heights and also of different widths.

7. Cooker according to one of the preceding claims **characterised in that** the fan (20) is of the axial or radial type.
